(19) Europäisches Patentamt
European Patent Office
Office européen des brevets

(11) **EP 3 746 316 B1**

(12) **FASCICULE DE BREVET EUROPEEN**

(45) Date de publication et mention
de la délivrance du brevet:
**05.01.2022 Bulletin 2022/01**

(21) Numéro de dépôt: **19708135.9**

(22) Date de dépôt: **29.01.2019**

(51) Int Cl.:
***B60H 1/00*** *(2006.01)*          ***B60H 1/32*** *(2006.01)*
***H01M 10/625*** *(2014.01)*     ***H01M 10/663*** *(2014.01)*
***H01M 10/613*** *(2014.01)*

(86) Numéro de dépôt international:
**PCT/FR2019/050186**

(87) Numéro de publication internationale:
**WO 2019/150030 (08.08.2019 Gazette 2019/32)**

(54) **PROCEDE DE CONTROLE D'UN SYSTEME DE TRAITEMENT THERMIQUE D'UN ELEMENT D'UNE CHAINE DE TRACTION ELECTRIQUE DE VEHICULE**

VERFAHREN ZUR STEUERUNG EINES SYSTEMS ZUR WÄRMEBEHANDLUNG EINES BAUTEILS EINER ELEKTRISCHEN TRAKTIONSKETTE EINES FAHRZEUGS

METHOD FOR CONTROLLING A SYSTEM FOR HEAT TREATMENT OF A COMPONENT OF AN ELECTRIC TRACTION CHAIN OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2018 FR 1850792**

(43) Date de publication de la demande:
**09.12.2020 Bulletin 2020/50**

(73) Titulaire: **Valeo Systemes Thermiques
78320 Le Mesnil-Saint-Denis (FR)**

(72) Inventeurs:
• **YAHIA, Mohamed**
  **78322 Le Mesnil Saint-Denis Cedex (FR)**
• **NICOLAS, Bertrand**
  **78322 Le Mesnil Saint-Denis Cedex (FR)**
• **LIU, Jin-Ming**
  **78322 Le Mesnil Saint-Denis Cedex (FR)**

(74) Mandataire: **Valeo Systèmes Thermiques
Service Propriété Intellectuelle
ZA l'Agiot, 8 rue Louis Lormand
CS 80517
La Verrière
78322 Le Mesnil-Saint-Denis Cedex (FR)**

(56) Documents cités:
WO-A1-2014/023596      JP-A- 2002 370 527
US-A1- 2017 106 724      US-A1- 2017 151 856
US-A1- 2017 317 393      US-A1- 2018 001 784

**Description**

Le domaine de la présente invention est celui des systèmes de traitement thermique pour véhicule, notamment pour véhicule automobile. Les véhicules automobiles sont couramment équipés de systèmes de traitement thermiques utilisés pour chauffer ou refroidir différentes zones ou différents composants du véhicule. Il est notamment connu d'utiliser un système de traitement thermique pour traiter thermiquement un flux d'air envoyé dans l'habitacle du véhicule.

Dans une autre application, il est connu d'utiliser un système de traitement thermique pour refroidir un élément d'une chaîne de traction électrique du véhicule, ce dernier étant utilisé pour fournir une énergie à un moteur électrique capable de mettre en mouvement le véhicule. Un circuit de fluide réfrigérant, compris dans le système de traitement thermique, fournit ainsi l'énergie capable de refroidir l'élément pendant son utilisation en phases de roulage. Le circuit de fluide réfrigérant est ainsi dimensionné pour refroidir cet élément pour des températures qui restent modérées.

Ainsi, le document US 2017/317393 A1 divulgue un système de traitement thermique pour refroidir un élément d'une chaîne de traction électrique et l'habitacle d'un véhicule comprenant un échangeur de chaleur entre un circuit de fluide réfrigérant et une boucle de fluide caloporteur, et au moins un moyen de contournement configuré pour adapter un débit du fluide caloporteur dans cet échangeur de chaleur.

Il est également connu de charger un dispositif de stockage électrique du véhicule en le raccordant pendant plusieurs heures au réseau électrique domestique. Cette technique de charge longue permet de maintenir la température du dispositif de stockage électrique en dessous d'un certain seuil, ce qui permet de se passer de tout système de refroidissement du dispositif de stockage électrique. Une nouvelle technique de charge a fait son apparition récemment. Elle consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique au-delà d'un seuil critique pour le dispositif de stockage électrique. Un traitement thermique se fait de façon connue par une boucle de circulation de fluide caloporteur bénéficiant d'échanges thermiques avec le circuit de fluide réfrigérant. Par ailleurs, il faut considérer la possibilité que les occupants du véhicule restent à l'intérieur du véhicule tout ou partie du temps de charge mentionné ci-dessus. Il faut alors également traiter thermiquement l'habitacle pendant cette charge rapide pour maintenir des conditions de confort acceptables par les occupants, notamment quand la température extérieure au véhicule dépasse 30°C. Ces deux demandes en refroidissement impliquent un dimensionnement du système de traitement thermique qui le rend peu compatible avec les contraintes des véhicules automobiles actuels, notamment les véhicules mus par un moteur électrique.

Le problème technique réside donc dans la capacité d'une part à dissiper les calories générées par l'élément d'une chaîne de traction électrique, notamment le dispositif de stockage électrique pendant la phase de charge rapide, et d'autre part à refroidir l'habitacle, tant en limitant la consommation et/ou l'encombrement et/ou les nuisances sonores d'un système de traitement thermique capable de remplir simultanément ces deux fonctions.

L'invention s'inscrit dans ce contexte et propose une solution technique qui concoure à l'atteinte de ce double objectif, c'est-à-dire maintenir l'élément de la chaîne de traction électrique, par exemple le dispositif de stockage électrique, en dessous d'une température seuil, avantageusement pendant une phase de charge rapide, et refroidir l'habitacle du véhicule. Cette solution technique est appliquée au moyen d'un système de traitement thermique astucieusement conçu pour réguler les besoins en apport énergétique entre un circuit de fluide réfrigérant et une boucle de circulation de fluide caloporteur, en fonction de l'activation d'une demande de refroidissement de l'élément de la chaîne de traction électrique du véhicule, par exemple lors d'une phase de charge rapide.

L'invention a donc pour objet un procédé de contrôle d'un système de traitement thermique d'un véhicule, le système de traitement thermique comprenant :

- au moins un circuit de fluide réfrigérant comprenant au moins un dispositif de compression du fluide réfrigérant et un premier échangeur thermique configuré pour traiter thermiquement un habitacle du véhicule,
- une boucle de circulation de fluide caloporteur comprenant un moyen de mise en circulation du fluide caloporteur dans la boucle de circulation et un deuxième échangeur thermique configuré pour traiter thermiquement au moins un élément d'une chaîne de traction électrique du véhicule,
- un échangeur de chaleur apte à mettre en œuvre un échange thermique entre le fluide réfrigérant et le fluide caloporteur,
- la boucle de circulation de fluide caloporteur comprenant au moins un moyen de contournement configuré pour adapter un débit du fluide caloporteur dans l'échangeur de chaleur,

caractérisé en ce que le procédé de contrôle comprend une étape de contrôle du débit de fluide caloporteur dans l'échangeur de chaleur réalisée au moins en fonction d'une température du fluide réfrigérant en sortie du premier échangeur thermique, en ce que le contrôle du débit (Mw_e) de fluide caloporteur (FC) dans l'échangeur de chaleur (33) prend en compte une consigne de vitesse maximale (Vmax) du dispositif de compression (5), et en ce que, lorsque la consigne de vitesse maximale (Vmax) du dispositif de compression (5) est atteinte ou dépassée, on augmente une valeur seuil de température (Ts) à laquelle est comparée la température (Treo) du fluide réfrigérant en sortie du premier échangeur thermique (8).

Le circuit de fluide réfrigérant est un circuit fermé qui met en œuvre un cycle thermodynamique. Le dispositif de compression du fluide réfrigérant, que comprend le circuit de fluide réfrigérant, permet de comprimer le fluide réfrigérant. Le dispositif de compression est par exemple un compresseur, et l'invention trouve une application toute particulière lorsque le compresseur est un compresseur électrique à cylindrée fixe et à vitesse variable. 1l est ainsi possible de contrôler la puissance thermique du circuit selon l'invention.

Le fluide réfrigérant est par exemple un fluide sous-critique, tel que celui connu sous la référence R134A ou 1234YF. Alternativement, le fluide peut être super-critique, tel que le dioxyde de carbone dont la référence est R744.

Le premier échangeur thermique est apte à fonctionner en évaporateur. Lors de la mise en œuvre du premier échangeur thermique en évaporateur, un flux d'air est refroidi par son passage au travers du premier échangeur thermique. Le flux d'air ainsi modifié thermiquement par l'évaporateur est ensuite distribué dans l'habitacle du véhicule.

La boucle de circulation de fluide caloporteur est un circuit fermé qui comprend une conduite principale et un moyen de contournement. Le moyen de contournement comporte au moins une conduite de contournement pouvant être mise en communication avec la conduite principale au niveau d'un point de divergence et d'un point de convergence. Lorsque la conduite de contournement est ouverte, elle permet à au moins une partie de fluide caloporteur de contourner l'échangeur de chaleur. Lorsqu'elle est fermée, le fluide caloporteur circule uniquement dans la conduite principale et transite obligatoirement par l'échangeur de chaleur. Le passage du fluide caloporteur dans le moyen de contournement affecte la température du fluide caloporteur qui passe dans l'échangeur de chaleur. Le fluide caloporteur est ainsi moins refroidi que s'il emprunte uniquement la conduite principale.

Un moyen de circulation, tel une pompe, est apte à permettre la circulation du fluide caloporteur FC dans la boucle de circulation.

Le deuxième échangeur thermique est configuré pour traiter thermiquement un ou plusieurs éléments de la chaîne de traction électrique du véhicule. Un élément de la chaîne de traction électrique du véhicule inclut un dispositif de stockage électrique du véhicule dédié à l'alimentation électrique d'un moteur électrique de mise en mouvement du véhicule, l'électronique de commande et/ou de puissance de cette chaîne de traction, les connexions électriques, et d'une manière générale tous composants de cette chaîne de traction électrique susceptibles de s'échauffer pendant une phase de charge rapide.

Par exemple, le deuxième échangeur thermique peut être configuré pour traiter thermiquement le dispositif de stockage électrique du véhicule, notamment en captant les calories générées par ce dispositif de stockage électrique. La boucle de circulation de fluide caloporteur est quant à elle destinée à transporter les calories du composant constituant l'élément de la chaîne de traction électrique vers l'échangeur de chaleur. Cette chaleur est ainsi restituée au fluide réfrigérant.

L'échangeur de chaleur est apte à être traversé à la fois par le fluide réfrigérant et par le fluide caloporteur. 1l s'agit donc d'un échangeur de chaleur bi-fluide. Plus particulièrement, l'échangeur de chaleur est placé sur la conduite principale de la boucle de circulation, entre le point de divergence et le point de convergence. Cet échangeur de chaleur permet un transfert d'énergie thermique entre le fluide réfrigérant et le fluide caloporteur.

Le procédé selon l'invention vise à contrôler le débit de fluide caloporteur dans l'échangeur de chaleur. Ce contrôle comprend à la fois une collecte de données émanant du système de traitement thermique, et la mise en œuvre d'une modification de débit de fluide caloporteur dans l'échangeur de chaleur en fonction de ces données. Le contrôle du débit de fluide caloporteur dans l'échangeur de chaleur intervient dans le contexte d'un ajustement des besoins du système de traitement thermique, reflet des puissances de refroidissement nécessaires à la fois pour le premier échangeur thermique et pour le deuxième échangeur thermique. Selon l'invention, l'ajustement des besoins du système de traitement thermique est fonction d'une donnée qu'est la température du fluide réfrigérant en sortie du premier échangeur thermique.

Le procédé ordonne ainsi un débit de fluide caloporteur dans l'échangeur de chaleur fluide réfrigérant/fluide caloporteur qui permet de maintenir une température d'évaporation en sortie du premier échangeur thermique compatible avec le besoin en refroidissement requis dans l'habitacle du véhicule et également compatible avec le niveau de refroidissement requis pour l'élément de la chaîne de traction électrique que l'on cherche à refroidir.

Le contrôle du débit de fluide caloporteur dans l'échangeur de chaleur joue sur une répartition du fluide caloporteur entre la conduite principale et la conduite de contournement. Un débit moindre de fluide caloporteur traversant l'échangeur de chaleur par rapport au débit de fluide caloporteur traversant la conduite de contournement permet d'ajuster une capacité de refroidissement requise au niveau de l'échangeur de chaleur.

Un débit total « Mw_total » correspond au débit de fluide caloporteur circulant dans le deuxième échangeur thermique. Un débit « Mw_e » correspond au débit de fluide caloporteur traversant l'échangeur de chaleur. Un débit secondaire « Mw_c » correspond au débit de fluide caloporteur circulant dans la conduite de contournement.

Dans un premier cas n'employant pas la conduite de contournement, le débit « Mw total » peut-être égal au débit « Mw_e ». Dans un deuxième cas, employant la conduite de contournement, le débit total « Mw total » correspond à la somme entre le débit « Mw_e » et le débit secondaire « Mw_c ».

Si l'efficacité de l'échangeur de chaleur est voisine de 1, par exemple pour un échangeur de chaleur à grande capacité, alors pour un débit « Mw_e » faible, une puissance froide, dite « capacité frigorifique », correspondant à la formule suivante, est produite :

$$\text{Capacité frigorifique} = Gb^*(Tb\text{-}Treo)$$

Dans cette formule, « Gb » est un coefficient qui reflète la conductivité thermique de l'élément refroidi de la chaîne de traction électrique, par exemple du dispositif de stockage électrique, « Tb » est une température de l'élément refroidi, notamment le dispositif de stockage électrique et « Treo » est une température du fluide réfrigérant en sortie du premier échangeur thermique.

Selon un autre aspect de l'invention, le procédé comprend une étape préalable de détection d'une situation de demande de refroidissement de l'élément de la chaîne de traction électrique. Avantageusement, cette étape préalable est une mise en charge rapide du dispositif de stockage électrique.

Lorsque l'élément de la chaîne de traction électrique est le dispositif de stockage électrique, ce dernier nécessite un refroidissement adapté en fonction de l'élévation de sa température, pour éviter qu'en phase de charge rapide, il ne dépasse sa température critique. On peut donc distinguer des conditions d'utilisation standard et des conditions d'utilisation où le dispositif de stockage électrique est en charge rapide. On entend par conditions d'utilisation standard, des conditions de roulage du véhicule, où le circuit de fluide réfrigérant est en capacité de traiter thermiquement simultanément le flux d'air destiné à l'habitacle et le dispositif de stockage électrique. Pendant une phase de charge rapide, il est nécessaire d'empêcher que la température critique du dispositif de stockage électrique soit dépassée. Par ailleurs, le confort thermique de l'habitacle doit également être maintenu. Le procédé selon l'invention est alors mis en œuvre.

Selon un autre aspect de l'invention, l'étape de contrôle du débit de fluide caloporteur dans l'échangeur de chaleur prend en compte une température de l'élément de la chaîne de traction électrique, par exemple du dispositif de stockage électrique. Ce dernier, s'il chauffe, demande une capacité de refroidissement plus importante. C'est par exemple le cas en phase de charge rapide.

Selon un autre aspect de l'invention, l'étape de contrôle du débit de fluide caloporteur dans l'échangeur de chaleur prend en compte une puissance de refroidissement requise par l'élément de la chaîne de traction électrique. La puissance de refroidissement requise par exemple par le dispositif de stockage électrique est le besoin en refroidissement pour maintenir la température du dispositif de stockage électrique en dessous d'un seuil jugé critique pour le bon état de ce dispositif.

Selon l'invention, l'étape de contrôle du débit de fluide caloporteur dans l'échangeur de chaleur prend en compte une consigne de vitesse maximale du dispositif de compression. _Prendre en compte la consigne de vitesse maximale du dispositif de compression permet d'éviter de sur-solliciter celui-ci, et ainsi éviter les nuisances acoustiques consécutives à l'utilisation du dispositif de compression au-delà de cette limite. Limiter la vitesse du dispositif de compression à sa consigne de vitesse maximale permet de garantir un confort acoustique dans le véhicule, notamment quand le véhicule à l'arrêt est en situation de charge rapide.

Selon lorsque la consigne de vitesse maximale du dispositif de compression est atteinte ou dépassée, on augmente une valeur seuil de température à laquelle est comparée la température du fluide réfrigérant en sortie du premier échangeur thermique. Ceci se traduit par une augmentation de la température du fluide réfrigérant en sortie du premier échangeur thermique. Le procédé privilégie le traitement thermique de l'élément de la chaîne de traction électrique, en autorisant une dérive contrôlée de la température du fluide réfrigérant en sortie du premier échangeur thermique.

De façon particulière, une augmentation de la température du fluide réfrigérant, avantageusement comprise entre +1.5 à +2.5°C, est autorisée. Le compromis global entre refroidissement du dispositif de stockage électrique, notamment, et le confort acoustique reste ainsi acceptable.

Selon un aspect de l'invention, le procédé est applicable tout particulièrement quand l'élément de la chaîne de traction électrique est un dispositif de stockage électrique du véhicule, ce dernier étant destiné à fournir une énergie à au moins un moteur électrique au moyen duquel le véhicule est mu.

Selon un autre aspect de l'invention, le moyen de contournement comprend au moins une vanne à section de passage variable. La vanne à section de passage variable est notamment portée par la conduite de contournement. Cette vanne à section de passage variable permet de réguler la circulation du fluide caloporteur dans la conduite de contournement. Indirectement, cette vanne à section de passage variable influe également sur la circulation dans la conduite principale, puisque la conduite principale est en communication avec la conduite de contournement. Le degré d'ouverture de la section de passage de la vanne module le débit de fluide caloporteur passant au travers et contournant l'échangeur de chaleur.

Selon un autre aspect de l'invention, la température du fluide réfrigérant est mesurée par un capteur de température disposé au contact du fluide réfrigérant en sortie du premier échangeur thermique. _Ce capteur de température disposé au contact du fluide réfrigérant en sortie du premier échangeur thermique effectue une mesure directe. Lors de la mise en œuvre du premier échangeur thermique en mode évaporateur, cette température du fluide réfrigérant correspond à une température d'évaporation.

Selon un aspect alternatif de l'invention, la température du fluide réfrigérant en sortie du premier échangeur thermique est estimée en fonction d'un débit de flux d'air traversant le premier échangeur thermique et de la température de ce flux d'air. Le débit du flux d'air est estimé à partir d'une mesure d'un courant consommé par un moto-ventilateur qui met en mouvement le flux d'air. La température du flux d'air est mesurée en aval du premier échangeur thermique, selon le sens de circulation du flux d'air, par un capteur de température d'air disposé en sortie du premier échangeur thermique. La température du fluide réfrigérant en sortie du premier échangeur thermique est ainsi obtenue de façon indirecte.

D'autres caractéristiques, détails et avantages de l'invention ressortiront plus clairement à la lecture de la description donnée ci-après à titre indicatif en relation avec des dessins dans lesquels

- la figure 1 est une vue schématique d'un système de traitement thermique auquel est appliqué un procédé selon l'invention,

- la figure 2 est un logigramme décrivant une mise en œuvre du procédé selon l'invention,

- la figure 3 illustre de manière schématique le système de traitement thermique montré à la figure 1, exploité selon un mode de fonctionnement consistant à refroidir un habitacle de véhicule lors d'une charge rapide du dispositif de stockage électrique du véhicule,

- la figure 4 illustre de manière schématique le système de traitement thermique montré à la figure 1, exploité selon un mode de fonctionnement consistant à chauffer un habitacle de véhicule lors d'une charge rapide du dispositif de stockage électrique du véhicule,

- la figure 5 est un graphique illustrant la relation entre débit de fluide caloporteur et une conductivité thermique d'un élément de la chaîne traction électrique, par exemple un dispositif de stockage électrique,

- la figure 6 illustre la conductivité thermique du système de traitement thermique dans son ensemble.

1l faut tout d'abord noter que les figures exposent l'invention de manière détaillée pour mettre en œuvre l'invention, lesdites figures pouvant bien entendu servir à mieux définir l'invention le cas échéant. Ces figures sont des représentations schématiques qui illustrent comment sont réalisés les circuits présents dans le système de traitement thermique incluant un circuit de fluide réfrigérant et une boucle de circulation de fluide caloporteur, ce qui les compose et comment les fluides y circulent. En particulier, les circuits, auxquels est appliqué un procédé selon l'invention, comprennent principalement des échangeurs thermiques, un échangeur de chaleur, un dispositif de compression du fluide réfrigérant, un moyen de circulation du fluide caloporteur, des organes de détentes, des capteurs de température, des conduites reliant les composants et reliant des points de raccordement, et des vannes ou clapet anti-retour. Le système de traitement thermique est également placé sous la dépendance d'un dispositif de contrôle qui agit sur certains de ces composants, notamment en vue de réguler des débits de fluide.

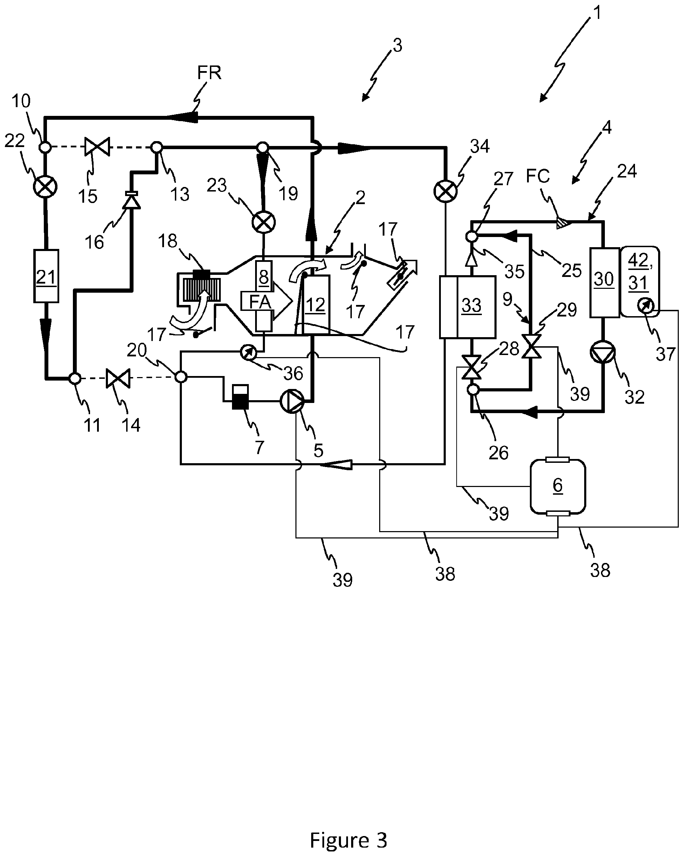

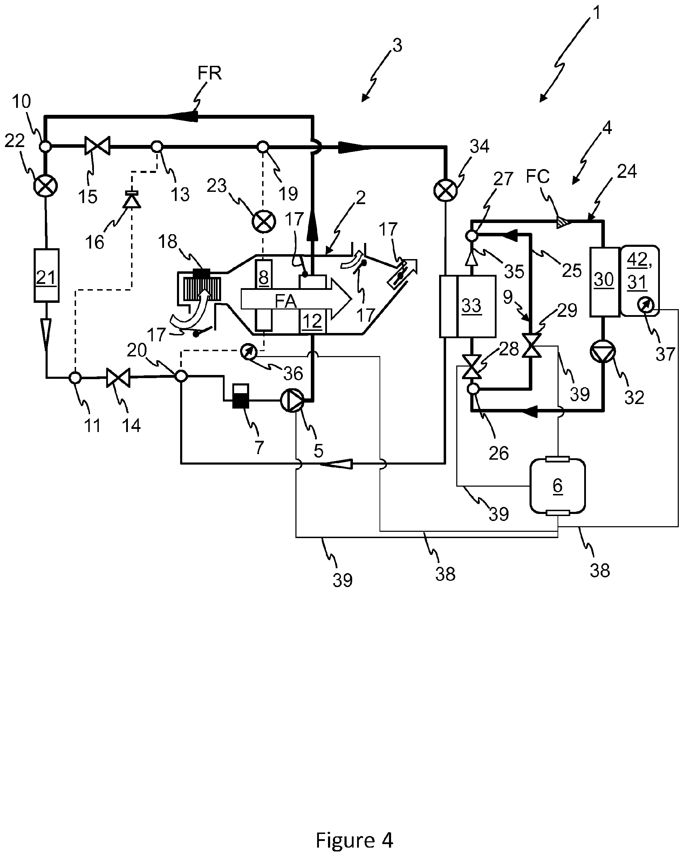

Les termes amont et aval, entrée et sortie d'un composant, employés dans la description qui suit se réfèrent au sens de circulation du fluide considéré, c'est-à-dire un fluide réfrigérant ou un fluide caloporteur, ou un flux d'air destiné à être envoyé vers un habitacle du véhicule. Le fluide réfrigérant et le fluide caloporteur sont symbolisés par une flèche sur une conduite qui illustre le sens de circulation de ces derniers dans la conduite considérée. Les traits pleins illustrent une portion de circuit où le fluide considéré circule, tandis que les traits pointillés montrent une absence de circulation du fluide considéré. En figure 3 et 4, les traits les plus épais utilisés dans l'illustration du circuit du fluide réfrigérant correspondent à une portion de circuit où le fluide réfrigérant est sous haute pression, tandis que les traits plus fins montrent une portion de circuit où le fluide réfrigérant est sous basse pression.

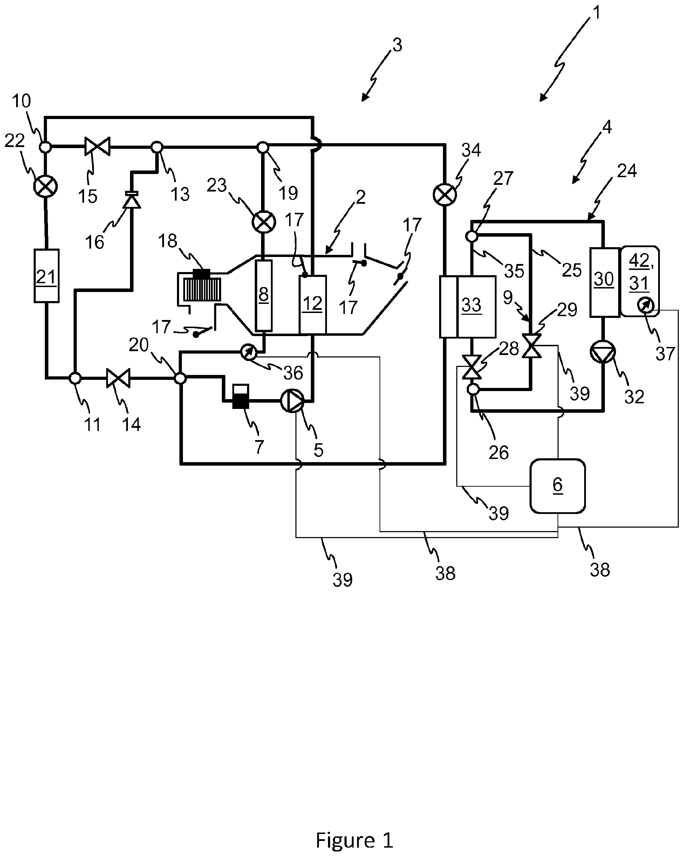

La figure 1 montre ainsi un système de traitement thermique 1 auquel est appliqué un procédé selon l'invention. Le système de traitement thermique 1 se décompose en deux circuits chacun fermés : un circuit 3 de fluide réfrigérant et une boucle de circulation 4 du fluide caloporteur. Certains composants du circuit 3 de fluide réfrigérant et de la boucle de circulation 4 du fluide caloporteur sont par ailleurs contrôlés par un dispositif de contrôle 6.

Dans un premier temps, les composants du circuit 3 de fluide réfrigérant sont décrits. Le circuit 3 de fluide réfrigérant comprend un réseau de conduites reliant les composants du circuit 3 de fluide réfrigérant. Le réseau de conduites est constitué de telle sorte à ce que certains composants soient disposés en série et d'autres en parallèle. Des points de raccordements de conduites servent à raccorder les conduites entre elles pour former le réseau de conduites.

Le circuit 3 de fluide réfrigérant comprend un dispositif de compression 5 du fluide réfrigérant. On notera que le dispositif de compression 5 peut par exemple prendre la forme d'un compresseur électrique, c'est-à-dire un compresseur qui comprend un mécanisme de compression, un moteur électrique et une unité de contrôle et de conversion électrique. Un mécanisme de rotation propre au dispositif de compression 5 est mis en rotation par le moteur électrique dont la vitesse de rotation, dite vitesse V du dispositif de compression 5, est contrôlée par le dispositif de contrôle 6 qui lui est externe, comme cela sera indiqué par ailleurs.

Le circuit 3 de fluide réfrigérant comprend un quatrième échangeur thermique 12 en aval du dispositif de compression 5. Ce quatrième échangeur thermique 12 est en outre disposé dans une installation de ventilation, de chauffage, et/ou de climatisation 2. Le quatrième échangeur thermique 12 est utilisé en tant que condenseur, comme cela sera expliqué à la figure 4. Le quatrième échangeur thermique 12 est raccordé en sortie à un premier point de raccordement 10. Le premier point de raccordement 10 peut permettre au circuit 3 de fluide réfrigérant de diverger. En aval du premier point de raccordement 10, on trouve un premier organe de détente 22. En sortie de ce premier organe de détente 22 est placé un troisième échangeur thermique 21 apte à être utiliser en condenseur ou en évaporateur.

Un deuxième point de raccordement 11 est disposé en sortie du troisième échangeur thermique 21. Le deuxième point de raccordement 11 permet au circuit 3 de fluide réfrigérant de diverger. En aval du deuxième point de raccordement 11, on trouve d'une part un clapet anti-retour 16, et d'autre part une première vanne d'arrêt 14.

En aval du premier point de raccordement 10, on trouve une deuxième vanne d'arrêt 15. En sortie de la deuxième vanne d'arrêt 15 est disposé un troisième point de raccordement 13. Ce troisième point de raccordement 13 est par ailleurs disposé en aval du clapet anti-retour 16. En aval du troisième point de raccordement 13, on trouve un quatrième point de raccordement 19. Le quatrième point de raccordement 19 permet au circuit 3 de fluide réfrigérant de diverger. En sortie du quatrième point de raccordement 19 est disposé d'une part un deuxième organe de détente 23 et d'autre part un troisième organe de détente 34.

Le deuxième organe de détente 23 est raccordé en sortie à un premier échangeur thermique 8. Ce premier échangeur thermique 8 est en outre disposé dans l'installation de ventilation, de chauffage, et/ou de climatisation 2. En sortie du premier échangeur thermique 8, la conduite peut intégrer un capteur de température 36. Le capteur de température 36 est en effet disposé pour être apte à entrer en contact avec le fluide réfrigérant en sortie du premier échangeur thermique 8. En aval du capteur de température 36 on trouve un cinquième point de raccordement 20. Ce cinquième point de raccordement 20 permet au circuit 3 de fluide réfrigérant de converger. Le troisième organe de détente 34 est raccordé en sortie à un échangeur de chaleur 33. En aval de cet échangeur de chaleur 33 on trouve le cinquième point de raccordement 20.

Le premier organe de détente 22, le deuxième organe de détente 23 et le troisième organe de détente 34 sont en mesure de faire varier une puissance thermique dans la branche considérée du circuit de fluide réfrigérant en réduisant une section de passage du fluide réfrigérant en leur sein. Ils peuvent prendre indifféremment la forme d'un détendeur thermostatique, d'un détendeur électronique, d'un orifice-tube ou analogue. En aval du cinquième point de raccordement 20, on trouve un dispositif d'accumulation 7. Ce dispositif d'accumulation 7 est disposé immédiatement en amont d'une entrée du dispositif de compression 5.

Dans un deuxième temps, les composants de la boucle de circulation 4 de fluide caloporteur sont décrits. La boucle de circulation 4 de fluide caloporteur comporte une conduite principale 24 et une conduite de contournement 25. La conduite principale 24 et la conduite de contournement 25 sont en relation au niveau d'un point de divergence 26 et un point de convergence 27. La conduite principale 24, spécifiquement au niveau d'une portion 35, et la conduite de contournement 25, sont en série l'une par rapport à l'autre. La portion 35 de la conduite principale 24 s'étend entre le point de divergence 26 et le point de convergence 27.

La boucle de circulation 4 de fluide caloporteur comporte un moyen 32 de mise en circulation du fluide caloporteur, tel une pompe. Le moyen 32 de mise en circulation du fluide caloporteur est placé sur la conduite principale 24, hors de la portion 35. Le moyen 32 de mise en circulation du fluide caloporteur est relié au point de divergence 26. Ce point de divergence 26 peut permettre à la boucle de circulation 4 de fluide caloporteur de diverger : la conduite principale 24 s'y sépare entre la portion 35 de la conduite principale 24 et la conduite de contournement 25. Le point de divergence 26 est relié d'une part à une première vanne 28 à section de passage variable disposée sur la conduite principale 24, et d'autre part à une deuxième vanne 29 à section de passage variable disposée sur la conduite de contournement 25.

En sortie de la première vanne 28 à section de passage variable, on trouve l'échangeur de chaleur 33. En aval de l'échangeur de chaleur 33 est disposé le point de convergence 27. L'échangeur de chaleur 33 est disposé entre le point de divergence 26 et le point de convergence 27, sur la portion 35 de la conduite principale 24. En aval du point de convergence 27 est placé, sur la conduite principale 24, le deuxième échangeur thermique 30. Ce deuxième échangeur thermique 30 est relié en sortie au moyen 32 de mise en circulation du fluide caloporteur.

Le deuxième échangeur thermique 30 est en contact physique avec un élément d'une chaîne de traction électrique 42, comme un dispositif de stockage électrique 31 pour le traiter thermiquement. Sur ce dispositif de stockage électrique 31 est placé un capteur de température 37 apte à mesurer la température du dispositif de stockage électrique 31. Alternativement, le deuxième échangeur thermique 30 est en contact physique avec une autre élément de la chaîne de traction électrique 42, comme une unité d'électronique de puissance et/ou de commande, également porteuse d'un capteur de température capable de mesurer sa température.

En sortie de la deuxième vanne 29 à section de passage variable on trouve le point de convergence 27. Ce point de convergence 27 peut permettre à la boucle de circulation 4 de fluide caloporteur de converger : la portion 35 de la conduite principale 24 et la conduite de contournement 25 s'y rejoignent.

La figure 1 illustre un moyen de contournement 9 comprenant la conduite de contournement 25, la première vanne 28 à section de passage variable et/ou la deuxième vanne 29 à section de passage variable. Cette illustration n'est pas limitative et des variantes peuvent également être mise en œuvre. Le moyen de contournement 9 peut par exemple prendre la forme d'une conduite de contournement 25 et d'une unique vanne à section de passage variable, par exemple portée par la conduite de contournement 25 ou portée par la portion 35 de la conduite principale 24. 1l est également envisageable que le moyen de contournement 9 soit formé d'une conduite de contournement 25 et d'une vanne dite « trois voies » positionnée en lieu et place du point de divergence 26 ou du point de convergence 27.

Outre le circuit 3 de fluide réfrigérant et la boucle de circulation 4 du fluide caloporteur, la figure 1 illustre également l'installation de ventilation, de chauffage, et/ou de climatisation 2 et la façon dont sont raccordés les composants des circuits au dispositif de contrôle 6.

En entrée de l'installation de ventilation, de chauffage, et/ou de climatisation 2, un moto-moto-ventilateur 18 est apte à être actionné pour mettre en mouvement un flux d'air, représenté par les flèches sur les figures 3 et 4, de sorte à ce qu'il traverse ladite installation de ventilation, de chauffage, et/ou de climatisation 2. L'installation de ventilation, de chauffage, et/ou de climatisation 2 comporte des volets 17 dont l'orientation peut être modulée.

Le dispositif de contrôle 6 prend la forme d'un boîtier électronique incluant un calculateur, relié électriquement par des câbles 38 à différents capteurs, notamment des capteurs de température, disposés dans le système de traitement thermique 1. Parmi les capteurs de températures, on note en l'espèce le capteur de température 36 disposé au contact du fluide réfrigérant en sortie du premier échangeur thermique 8 et le capteur de température 37 de l'élément de la chaîne de traction électrique 42, en l'espèce le dispositif de stockage électrique 31. Le dispositif de contrôle 6 est également relié électriquement par un câble 38 au dispositif de compression 5 en vue de pouvoir moduler la vitesse V du dispositif de compression 5.

Le calculateur du dispositif de contrôle 6 est apte à calculer la puissance de refroidissement requise par le dispositif de stockage électrique 31. Le dispositif de contrôle 6 aussi apte à transmettre des consignes, comme l'ouverture de la première vanne 28 à section de passage variable et/ou de la deuxième vanne 29 à section de passage variable et/ou la vitesse V du dispositif de compression 5. Ces consignes peuvent être la conséquence des calculs effectués par le calculateur. Pour transmettre ses consignes, le dispositif de contrôle 6 est relié électriquement par des câbles 39 à la première vanne 28 à section de passage variable, à la deuxième vanne 29 à section de passage variable et au dispositif de compression 5.

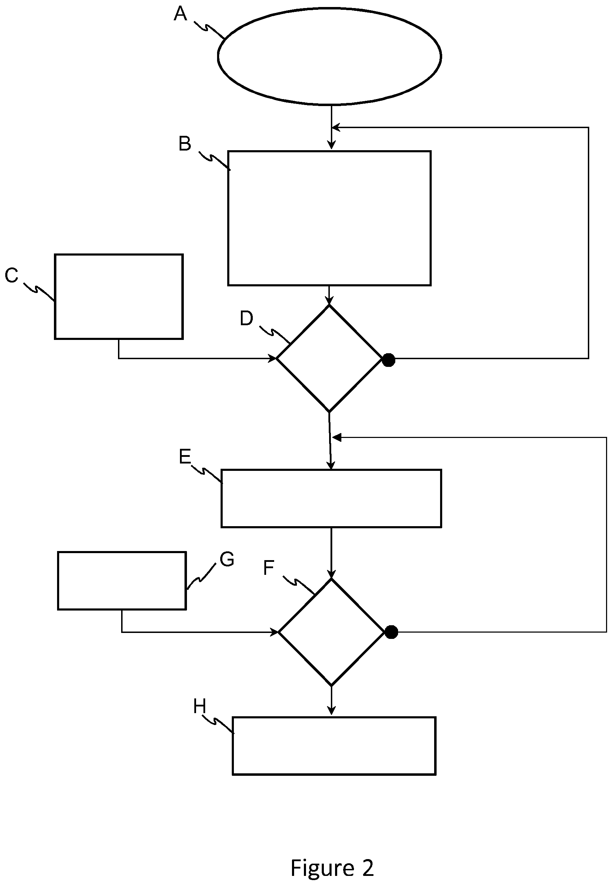

La figure 2 montre un logigramme décrivant une mise en œuvre du procédé selon l'invention. Le logigramme est une représentation graphique utilisant des symboles géométriques, chaque symbole géométrique étant caractérisés par un haut, un bas, un côté gauche, un côté droit. Chaque symbole géométrique représente une étape du procédé selon l'invention. Ainsi, une ellipse représente une étape qui intervient automatiquement dans le procédé, un rectangle représente une étape d'action et un losange représente une étape conditionnelle. Des flèches sont également utilisées, pour représenter des connexions entre ces étapes. Sur le logigramme, une entrée d'étape se fait par le haut ou le côté gauche du symbole géométrique, une sortie d'étape par le bas ou le côté droit du symbole géométrique. Une sortie d'étape associant une flèche à un rond plein correspond au nonrespect de l'étape. Une sortie d'étape à flèche seule correspond au respect de l'étape.

Le procédé selon l'invention est mis en œuvre suite à une demande de refroidissement du dispositif de stockage électrique 31, correspondant à l'étape A. Une telle demande de refroidissement est par exemple formée par une mise en charge rapide du dispositif de stockage électrique. Dans cette situation, le moyen de contournement 9 peut être utilisé. Le dispositif de contrôle 6 règle, dans une étape B, un débit « Mw_e » correspondant au débit de fluide caloporteur au travers de l'échangeur de chaleur 33, c'est-à-dire dans la portion 35 de la conduite principale 24. Cette étape B vise à maintenir la température du dispositif de stockage électrique 31 sous un certain seuil. Cette température est mesurée par le capteur de température 37 et vérifiée par le dispositif de contrôle 6.

Suite à ces étapes, le dispositif de contrôle 6 surveille la température « Treo » du fluide réfrigérant en sortie du premier échangeur thermique 8, par exemple mesurée dans une étape C par le capteur de température 36. Cette surveillance, opérée lors d'une étape D, compare la température « Treo » du fluide réfrigérant mesurée à une valeur seuil de température Ts à ne pas franchir. Cette valeur seuil de température Ts garantit que le flux d'air envoyé dans l'habitacle est refroidi selon la demande faite par les occupants de l'habitacle.

Si la valeur seuil de température Ts n'est pas franchie, le dispositif de contrôle 6 applique à nouveau l'étape B.

Si la valeur seuil de température Ts est franchie, le dispositif de contrôle 6 va appliquer des étapes visant dans un premier temps à ramener la température « Treo » du fluide réfrigérant en-dessous de la valeur seuil de température Ts. Pour ce faire, le dispositif de contrôle 6 adapte le débit « Mw_e » de fluide caloporteur qui circulent dans l'échangeur de chaleur 33. Dans une étape E, le dispositif de contrôle 6 transmet des consignes relatives à l'utilisation du moyen de contournement 9 de l'échangeur de chaleur 33, comme à l'étape B. Le dispositif de contrôle 6 transmet aussi des consignes au dispositif de compression 5, pour modifier et notamment augmenter, dans une étape G, la vitesse V du dispositif de compression 5 pour générer un débit de fluide réfrigérant adapté.

Le dispositif de contrôle 6 est paramétré pour ne pas transmettre de consigne de vitesse V du dispositif de compression 5 qui serait supérieure à une consigne de vitesse maximale Vmax. C'est ce qui est vérifié par une étape F. Si le résultat de l'étape G conduit à une consigne de vitesse du dispositif de compression 5 qui serait supérieure à la consigne de vitesse maximale Vmax de celui-ci, alors le choix est fait de dégrader le refroidissement de l'habitacle. Une étape H vise ainsi à autoriser une élévation, par exemple, de 1.5°C de la valeur seuil de température Ts en sortie du premier échangeur thermique 8. Ceci se traduit par une augmentation de la température mesurée ou estimée « Treo » du fluide réfrigérant en sortie du premier échangeur thermique.

Si les besoins en refroidissement du dispositif de stockage électrique et de l'habitacle n'impliquent pas de dépasser la consigne de vitesse maximale Vmax, le dispositif de contrôle 6 est renvoyé à l'étape E.

En se référant à présent aux figures 3 et 4, on voit plus précisément le système de traitement thermique 1 montré à la figure 1. La figure 3 montre son exploitation selon le mode « climatisation » et la figure 4 selon le mode « chauffage ». Ces deux figures illustrent de façon particulière une situation de charge rapide du dispositif de stockage électrique 31 du véhicule. La charge rapide du dispositif de stockage électrique 31 implique un besoin en refroidissement de celui-ci.

En mode « climatisation » et en mode « chauffage », le fluide réfrigérant FR est mis en circulation dans le circuit 3 de fluide réfrigérant FR et le fluide caloporteur FC est mis en circulation dans la boucle de circulation 4 du fluide caloporteur FC. A l'interface de ces deux fluides, l'échangeur de chaleur 33, dit bi-fluide en référence au fluide réfrigérant FR et au fluide caloporteur FC, met en œuvre un échange thermique entre le fluide réfrigérant FR et le fluide caloporteur FC.

Dans le mode de fonctionnement exposé figure 3, le système de traitement thermique 1 refroidit le flux d'air FA destiné à être envoyé vers l'habitacle du véhicule et refroidit simultanément le dispositif de stockage électrique 31 en situation de charge rapide.

Le flux d'air FA traverse l'installation de ventilation, de chauffage, et/ou de climatisation 2 pour y être refroidi. 1l y circule grâce au moto-moto-ventilateur 18. Les volets 17, de par leur orientation, dirigent le flux d'air FA dont la température baisse en passant dans le premier échangeur thermique 8 utilisé en évaporateur. Un volet 17 permet au flux d'air FA de contourner le quatrième échangeur thermique 12 avant sa distribution vers différentes parties de l'habitacle.

Dans le système de traitement thermique 1 exploité en mode « climatisation », seuls certains des composants du circuit 3 de fluide réfrigérant FR sont parcourus par le fluide réfrigérant FR. Ces différents composant sont explicités ci-dessous, et pris dans le sens de circulation du fluide réfrigérant FR.

Le dispositif de compression 5 fait passer le fluide réfrigérant FR de la basse pression à la haute pression. Puis, le fluide réfrigérant FR haute pression traverse le quatrième échangeur thermique 12, thermodynamiquement neutre dans ce mode de fonctionnement, le premier point de raccordement 10, le premier organe de détente 22 inopérant puisque complètement ouvert. Le fluide réfrigérant FR haute pression passe ensuite dans le troisième échangeur thermique 21 utilisé en tant que condenseur, permettant un refroidissement du fluide réfrigérant FR avant son passage successif au travers du deuxième point de raccordement 11, du clapet anti-retour 16, du troisième point de raccordement 13 et du quatrième point de raccordement 19. De ce quatrième point de raccordement 19 le fluide réfrigérant FR se sépare en deux flux, ces deux flux se regroupant au cinquième point de raccordement 20 avant de rejoindre le dispositif d'accumulation 7 et de revenir au dispositif de compression 5, terminant ainsi un cycle thermodynamique.

Entre le quatrième point de raccordement 19 et le cinquième point de raccordement 20, on a d'une part le fluide réfrigérant FR qui traverse le deuxième organe de détente 23, passant ainsi de la haute pression à la basse pression.

Ce fluide réfrigérant FR basse pression alimente le premier échangeur thermique 8 utilisé en évaporateur pour refroidir le flux d'air FA traversant l'installation de ventilation, de chauffage, et/ou de climatisation 2. Le fluide réfrigérant FR chauffe en passant dans ce premier échangeur thermique 8. Passé le capteur de température 36 en sortie du premier échangeur thermique 8, le fluide réfrigérant FR rejoint le cinquième point de raccordement 20.

Entre le quatrième point de raccordement 19 et le cinquième point de raccordement 20, on a d'autre part le fluide réfrigérant FR qui traverse le troisième organe de détente 34, passant ainsi de la haute pression à la basse pression. Ce fluide réfrigérant FR basse pression alimente l'échangeur de chaleur 33 utilisé en évaporateur pour refroidir le fluide caloporteur FC. Passé l'échangeur de chaleur 33, le fluide réfrigérant FR, qui y a été réchauffé, rejoint le cinquième point de raccordement 20.

Pour mettre en œuvre le mode « climatisation », la circulation du fluide réfrigérant FR est dépendante de la fermeture de la première vanne d'arrêt 14, de la fermeture de la deuxième vanne d'arrêt 15.

On considère à présent la boucle de circulation 4 du fluide caloporteur FC. Lorsque la demande de refroidissement du dispositif de stockage électrique 31 est enclenchée, notamment par une étape préalable de détection d'une phase de charge rapide, l'ensemble des composants de la boucle de circulation 4 du fluide caloporteur FC est traversé par le fluide caloporteur FC, cette circulation étant permise par le moyen 32 de mise en circulation du fluide caloporteur FC.

Quand le procédé objet de la figure 2 est mis œuvre, le débit « Mw_e » de fluide caloporteur FC dans l'échangeur de chaleur 33 est adapté, par réduction notamment, pour tenir compte de la température minimum requise du fluide réfrigérant FR en sortie du premier échangeur thermique 8. Le moyen de contournement 9 de l'échangeur de chaleur 33 est utilisé.

L'échangeur de chaleur 33 est placé sur la portion 35 de la conduite principale 24 de sorte à ce que le fluide caloporteur FC puisse en être dévié, totalement ou partiellement, en empruntant la conduite de contournement 25. En charge rapide, le fluide caloporteur FC est réparti, au niveau du point de divergence 26 et du point de convergence 27, entre la portion 35 de la conduite principale 24 et la conduite de contournement 25.

Cette répartition implique une modulation du débit de fluide caloporteur FC, modulation qui est placée sous la dépendance du dispositif de contrôle 6. Ce dispositif de contrôle 6 calcule un débit « Mw_e » approprié au travers de l'échangeur de chaleur 33 en fonction de la température d'évaporation. Le dispositif de contrôle 6 régule ce débit « Mw_e » au moyen de la première vanne 28 à section de passage variable et/ou de la deuxième vanne 29 à section de passage variable, le dispositif de contrôle 6 pouvant faire varier leur section de passage respectives.

Le fluide caloporteur FC qui se divise au point de divergence 26 est traité thermiquement par son passage dans l'échangeur de chaleur 33 ou non traité thermiquement s'il le contourne, puis rassemblé au point de convergence 27. Le fluide caloporteur FC y est plus froid qu'au point de divergence 26. Le fluide caloporteur FC globalement refroidi alimente alors le deuxième échangeur thermique 30 afin de traiter thermiquement le dispositif de stockage électrique 31 du véhicule.

Simultanément, le dispositif de contrôle 6 est informé de l'augmentation de température du fluide réfrigérant FR en sortie du premier échangeur thermique 8 due à la charge rapide. Cette température mesurée en sortie du premier échangeur thermique 8 est comparée avec la valeur seuil de température Ts à ne pas franchir.

Selon les besoins en refroidissement, le dispositif de contrôle 6 régule ainsi la vitesse V du dispositif de compression 5 et/ou module le degré d'ouverture de la première vanne 28 à section de passage variable et de la deuxième vanne 29 à section de passage variable.

Le système de traitement thermique 1 est configuré pour que le dispositif de compression 5 ne dépasse pas la consigne de vitesse maximale Vmax. Si la consigne de vitesse a pour incidence de franchir cette consigne de vitesse maximale Vmax, alors la valeur seuil de température Ts est réévaluée pour éviter toute sur-sollicitation du dispositif de compression 5.

En se référant maintenant à la figure 4, on voit plus précisément le système de traitement thermique 1 montré à la figure 1, exploité selon un mode de fonctionnement consistant à chauffer le flux d'air FA destiné à l'habitacle de véhicule, tout en refroidissant le dispositif de stockage électrique 31 en situation de demande de refroidissement du dispositif de stockage électrique 31, notamment en phase de charge rapide.

Le flux d'air FA destiné à être envoyé dans l'habitacle du véhicule traverse l'installation de ventilation, de chauffage, et/ou de climatisation 2 pour y être réchauffé. Il y circule grâce au moto-moto-ventilateur 18. Les volets 17 permettent au flux d'air FA de traverser le quatrième échangeur thermique 12, qui par condensation, chauffe ce flux d'air FA avant sa distribution vers différentes parties de l'habitacle.

Dans le système de traitement thermique 1 exploité en mode « chauffage », seuls certains des composants du circuit 3 de fluide réfrigérant FR sont parcourus par le fluide réfrigérant FR. Ces différents composant sont explicités ci-dessous, et pris dans le sens de circulation du fluide réfrigérant FR. Le fluide réfrigérant FR est comprimé par le dispositif de compression 5 qui le fait passer de la basse pression à la haute pression. Le fluide réfrigérant FR haute pression traverse alors le quatrième échangeur thermique 12 utilisé en tant que condenseur et décharge des calories dans le flux d'air FA. En sortie du quatrième échangeur thermique 12, le fluide réfrigérant arrive au premier point de raccordement 10 où il se sépare en deux flux, ces deux flux se regroupant au cinquième point de raccordement 20 avant de rejoindre le dispositif d'accumulation 7 et de revenir au dispositif de compression 5, terminant ainsi un cycle thermodynamique.

Entre le premier point de raccordement 10 et le cinquième point de raccordement 20, le fluide réfrigérant FR traverse le premier organe de détente 22 où le fluide réfrigérant FR subit une chute de pression et où le troisième échangeur thermique 21 est utilisé en tant qu'évaporateur pour que le fluide réfrigérant FR change d'état. Puis le fluide réfrigérant FR traverse le deuxième point de raccordement 11, la première vanne d'arrêt 14 en position ouverte et le cinquième point de raccordement 20.

Entre le premier point de raccordement 10 et le cinquième point de raccordement 20, on a par ailleurs le fluide réfrigérant FR qui traverse la deuxième vanne d'arrêt 15 en position ouverte, le troisième point de raccordement 13 et le quatrième point de raccordement 19. Puis le fluide réfrigérant FR traverse le troisième organe de détente 34 où il subit une chute de pression. Ce fluide réfrigérant FR basse pression alimente l'échangeur de chaleur 33. Cet échangeur de chaleur 33 est utilisé comme évaporateur pour refroidir le fluide caloporteur FC avant qu'il ne rejoigne le cinquième point de raccordement 20.

Pour mettre en œuvre le mode « chauffage », la circulation du fluide réfrigérant FR est dépendante de l'ouverture de la première vanne d'arrêt 14, de l'ouverture de la deuxième vanne d'arrêt 15 et de la fermeture du deuxième organe de détente 23. Dans ce mode, le clapet anti-retour 16, le deuxième organe de détente 23, le premier échangeur thermique 8 et le capteur de température 36 ne sont pas parcourus par le fluide réfrigérant FR.

La boucle de circulation 4 du fluide caloporteur FC fonctionne sur le même mode que ce qui a été décrit pour la figure 3. Seul est modulé le débit « Mw_e », via les sections de passage du fluide caloporteur FC de la première vanne 28 à section de passage variable et/ou de la deuxième vanne 29 à section de passage variable que le dispositif de contrôle 6 fait varier.

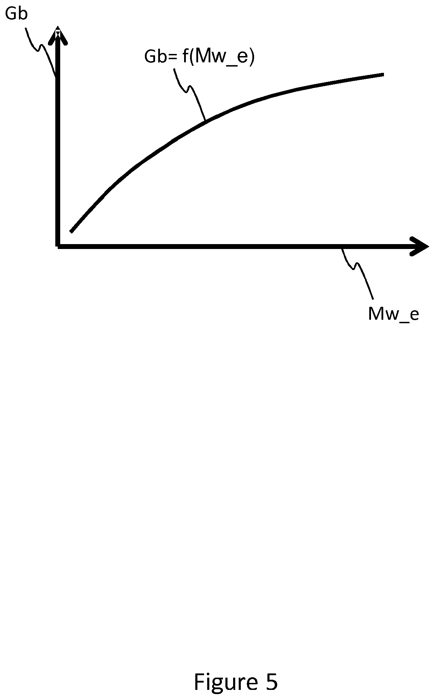

La figure 5 présente une courbe illustrant une conduction thermique du système de traitement thermique selon l'invention en fonction d'un débit circulant dans l'échangeur de chaleur 33. Cette conduction thermique « Gb » est fonction du débit « Mw_e » du fluide caloporteur FC passant par l'échangeur de chaleur 33. Sur la figure 5, une relation relative entre le coefficient « Gb » et le débit « Mw_e » correspond à une courbe « Gb=f(Mw_e) ». Plus le débit « Mw_e » est important, plus le coefficient « Gb » est élevé, et réciproquement.

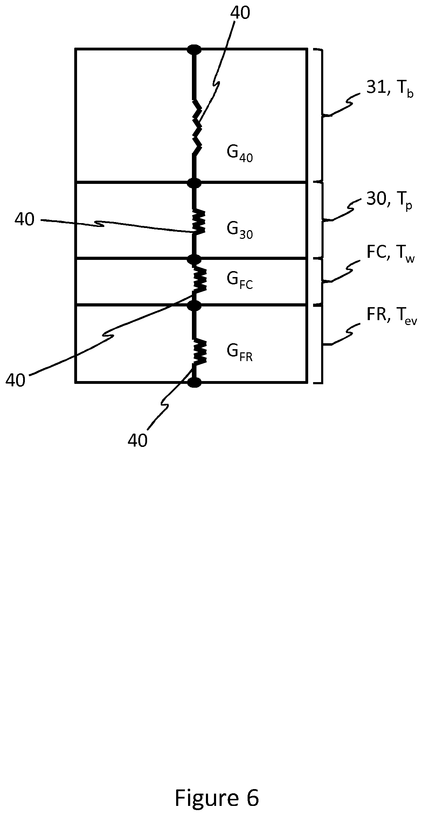

La figure 6 représente de façon schématique la conductivité thermique « Gb » évoquée ci-dessus des composants qui constitue le système de traitement thermique selon l'invention. La disposition des composants, par des rectangles superposés, transpose schématiquement des interfaces entre ces différents composants. Au niveau de ces interfaces et à l'intérieur de ces composants ont lieux des échanges par conduction thermique, cette dernière étant représentée par une sinusoïde 40.

Cette figure 6 montre donc que la conductivité thermique globale « Gb » du système de traitement thermique est constituée d'une conductivité thermique $G_{40}$ du dispositif de stockage électrique 31 et sa température Tb, d'une conductivité thermique $G_{30}$ du deuxième échangeur thermique 30 et sa température Tp, d'une conductivité thermique $G_{FC}$ de la boucle de circulation de fluide caloporteur FC et sa température Tw et, pour finir, d'une conductivité thermique $G_{FR}$ du circuit de fluide réfrigérant FR ainsi que sa température Treo.

On comprend à la lecture de ce qui précède que la présente invention propose un procédé de contrôle d'un système de traitement thermique adapté à la charge rapide. Ce procédé permet de réaliser simultanément le refroidissement de l'habitacle du véhicule et le refroidissement d'un élément de la chaîne de traction électrique, tel un dispositif de stockage électrique en phase de charge rapide, pour éviter que ce dernier ne dépasse la température critique.

## Revendications

1. Procédé de contrôle d'un système de traitement thermique (1) d'un véhicule, le système de traitement thermique (1) comprenant :

   - au moins un circuit (3) de fluide réfrigérant (FR) comprenant au moins un dispositif de compression (5) du fluide réfrigérant (FR) et un premier échangeur thermique (8) configuré pour traiter thermiquement un habitacle du véhicule,
   - une boucle de circulation (4) de fluide caloporteur (FC) comprenant un moyen (32) de mise en circulation du fluide caloporteur (FC) dans la boucle de circulation (4) et un deuxième échangeur thermique (30) configuré pour traiter thermiquement au moins un élément d'une chaîne de traction électrique (42) du véhicule,
   - un échangeur de chaleur (33) apte à mettre en œuvre un échange thermique entre le fluide réfrigérant (FR) et le fluide caloporteur (FC),
   - la boucle de circulation (4) de fluide caloporteur (FC) comprenant au moins un moyen de contournement (9) configuré pour adapter un débit (Mw_e) du fluide caloporteur (FC) dans l'échangeur de chaleur (33),

   **caractérisé en ce que** le procédé de contrôle comprend une étape (E) de contrôle du débit (Mw_e) de fluide caloporteur (FC) dans l'échangeur de chaleur (33) réalisée au moins en fonction d'une température (Treo) du fluide réfrigérant (FR) en sortie du premier échangeur thermique (8), **en ce que** le contrôle du débit (Mw_e) de fluide caloporteur (FC) dans l'échangeur de chaleur (33) prend en compte une consigne de vitesse maximale (Vmax) du dispositif de compression (5), et **en ce que**, lorsque la consigne de vitesse maximale (Vmax) du dispositif de compression (5) est atteinte ou dépassée, on augmente une valeur seuil de température (Ts) à laquelle est comparée la température (Treo) du fluide réfrigérant en sortie du premier échangeur thermique (8).

2. Procédé de contrôle selon l'une quelconque des revendications précédentes, comprenant une étape (A) préalable de détection d'une situation de demande de refroidissement de l'élément de la chaîne de traction électrique (42).

3. Procédé de contrôle selon la revendication précédente, au cours duquel l'étape (A) préalable de détection d'une situation de demande de refroidissement de l'élément de la chaîne de traction électrique (42) est une mise en charge rapide d'un dispositif de stockage électrique (31) du véhicule.

4. Procédé de contrôle selon l'une quelconque des revendications précédentes, dans lequel l'étape (E) de contrôle du débit (Mw_e) de fluide caloporteur (FC) dans l'échangeur de chaleur (33) prend en compte une température (Tb) de l'élément de la chaîne de traction électrique (42).

5. Procédé de contrôle selon l'une quelconque des revendications précédentes, dans lequel l'étape (E) de contrôle du débit (Mw_e) de fluide caloporteur (FC) dans l'échangeur de chaleur (33) prend en compte une puissance de refroidissement requise par l'élément de la chaîne de traction électrique (42).

6. Procédé de contrôle selon l'une quelconque des revendications précédentes, où le moyen de contournement (9) comprend au moins une vanne (28, 29) à section de passage variable.

7. Procédé de contrôle selon l'une quelconque des revendications précédentes, où la température (Treo) du fluide réfrigérant (FR) est mesurée par un capteur de température (36) disposé au contact du fluide réfrigérant (FR) en sortie du premier échangeur thermique (8).

8. Procédé de contrôle selon l'une quelconque des revendications 1 à 6, où la température (Treo) du fluide réfrigérant (FR) en sortie du premier échangeur thermique (8) est estimée en fonction d'un débit de flux d'air (FA) traversant le premier échangeur thermique (8) et de la température de ce flux d'air (FA).

9. Procédé de contrôle selon l'une quelconque des revendications précédentes, où l'élément de la chaîne de traction électrique (42) est un dispositif de stockage électrique (31) du véhicule.


**Patentansprüche**

1. Verfahren zur Steuerung eines Wärmebehandlungssystems (1) eines Fahrzeugs,
wobei das Wärmebehandlungssystem (1) umfasst:

   - mindestens einen Kreis (3) für ein Kältemittel (FR), umfassend mindestens eine Verdichtungsvorrichtung (5) zum Verdichten des Kältemittels (FR) und einen ersten Wärmetauscher (8), der dazu ausgestaltet ist, einen Innenraum des Fahrzeugs thermisch zu behandeln,
   - einen Umwälzkreislauf (4) für einen Wärmeträger (FC), umfassend ein Mittel (32) zum Umwälzen des Wärmeträgers (FC) in dem Umwälzkreislauf (4) und einen zweiten Wärmetauscher (30), der dazu ausgestaltet ist, mindestens ein Element eines elektrischen Antriebsstrangs (42) des Fahrzeugs thermisch zu behandeln,
   - einen Wärmetauscher (33), der geeignet ist, einen Wärmeaustausch zwischen dem Kältemittel (FR) und dem Wärmeträger (FC) durchzuführen,
   - wobei der Umwälzkreislauf (4) für den Wärmeträger (FC) mindestens ein Bypass-Mittel (9) umfasst, das dazu ausgestaltet ist, einen Volumenstrom (Mw_e) des Wärmeträgers (FC) im Wärmetauscher (33) anzupassen, **dadurch gekennzeichnet, dass** das Steuerungsverfahren einen Schritt (E) des Steuerns des Volumenstroms (Mw_e) des Wärmeträgers (FC) in dem Wärmetauscher (33) umfasst, der mindestens in Abhängigkeit von einer Temperatur (Treo) des Kältemittels (FR) im Auslass des ersten Wärmetauschers (8) ausgeführt wird, dass die Steuerung des Volumenstroms (Mw_e) des Wärmeträgers (FC) in dem Wärmetauscher (33) einen Höchstgeschwindigkeitssollwert (Vmax) der Verdichtungsvorrichtung (5) berücksichtigt und dass, wenn der Höchstgeschwindigkeitssollwert (Vmax) der Verdichtungsvorrichtung (5) erreicht ist oder überschritten wird, der Temperaturschwellenwert (Ts) angehoben wird, mit dem die Temperatur (Treo) des Kältemittels im Auslass des ersten Wärmetauschers (8) verglichen wird.

2. Steuerungsverfahren nach einem der vorhergehenden Ansprüche, umfassend einen vorherigen Schritt (A) des Erkennens einer Kühlbedarfssituation des Elements des elektrischen Antriebsstrangs (42).

3. Steuerungsverfahren nach dem vorhergehenden Anspruch, in dessen Verlauf der vorherige Schritt (A) des Erkennens einer Kühlbedarfssituation des Elements des elektrischen Antriebsstrangs (42) ein schnelles Aufladen einer elektrischen Speichervorrichtung (31) des Fahrzeugs ist.

4. Steuerungsverfahren nach einem der vorhergehenden Ansprüche, bei dem der Schritt (E) der Steuerung des Volumenstroms (Mw_e) des Wärmeträgers (FC) in dem Wärmetauscher (33) eine Temperatur (Tb) des Elements des elektrischen Antriebsstrangs (42) berücksichtigt.

5. Steuerungsverfahren nach einem der vorhergehenden Ansprüche, bei dem der Schritt (E) der Steuerung des Volumenstroms (Mw_e) des Wärmeträgers (FC) in dem Wärmetauscher (33) eine von dem Element des elektrischen Antriebsstrangs (42) angeforderte Kühlleistung berücksichtigt.

6. Steuerungsverfahren nach einem der vorhergehenden Ansprüche, wobei das Bypass-Mittel (9) mindestens ein Ventil (28, 29) mit variablem Durchtrittsquerschnitt umfasst.

7. Steuerungsverfahren nach einem der vorhergehenden Ansprüche, wobei die Temperatur (Treo) des Kältemittels (FR) von einem Temperaturfühler (36) gemessen wird, der in Kontakt mit dem Kältemittel (FR) im Auslass des ersten Wärmetauschers (8) angeordnet ist.

**8.** Steuerungsverfahren nach einem der Ansprüche 1 bis 6, wobei die Temperatur (Treo) des Kältemittels (FR) im Auslass des ersten Wärmetauschers (8) in Abhängigkeit von einem Volumenstrom eines Luftstroms (FA), der den ersten Wärmetauscher (8) durchströmt, und von der Temperatur dieses Luftstroms (FA) geschätzt wird.

**9.** Steuerungsverfahren nach einem der vorhergehenden Ansprüche, wobei das Element des elektrischen Antriebsstrangs (42) eine elektrische Speichervorrichtung (31) des Fahrzeugs ist.

**Claims**

**1.** Method for controlling a thermal treatment system (1) for a vehicle, the thermal treatment system (1) comprising:

- at least one refrigerant (FR) circuit (3) comprising at least one refrigerant (FR) compression device (5) and a first thermal exchanger (8) configured to thermally treat a vehicle interior;
- a heat transfer fluid (FC) circulation loop (4) comprising a means (32) for circulating the heat transfer fluid (FC) in the circulation loop (4) and a second thermal exchanger (30) configured to thermally treat at least one element of an electric power train (42) of the vehicle;
- a heat exchanger (33) able to implement a thermal exchange between the refrigerant (FR) and the heat transfer fluid (FC);
- the heat transfer fluid (FC) circulation loop (4) comprising at least one bypass means (9) configured to adapt a flow rate (Mw_e) of the heat transfer fluid (FC) in the heat exchanger (33),

**characterized in that** the control method comprises a step (E) of controlling the flow rate (Mw_e) of heat transfer fluid (FC) in the heat exchanger (33) that is carried out at least as a function of a temperature (Treo) of the refrigerant (FR) exiting the first thermal exchanger (8), **in that** the control of the flow rate (Mw_e) of heat transfer fluid (FC) in the heat exchanger (33) takes into account a maximum speed setpoint (Vmax) of the compression device (5), and **in that**, when the maximum speed setpoint (Vmax) of the compression device (5) is reached or exceeded, a temperature threshold value ($T_s$) with which the temperature (Treo) of the refrigerant exiting the first thermal exchanger (8) is compared is increased.

**2.** Control method according to any one of the preceding claims, comprising a prior step (A) of detecting a cooling demand situation for the element of the electric power train (42).

**3.** Control method according to the preceding claim, during which the prior step (A) of detecting a cooling demand situation for the element of the electric power train (42) is rapid charging of an electrical storage device (31) of the vehicle.

**4.** Control method according to any one of the preceding claims, wherein the step (E) of controlling the flow rate (Mw_e) of heat transfer fluid (FC) in the heat exchanger (33) takes into account a temperature (Tb) of the element of the electric power train (42).

**5.** Control method according to any one of the preceding claims, wherein the step (E) of controlling the flow rate (Mw_e) of heat transfer fluid (FC) in the heat exchanger (33) takes into account a cooling power required by the element of the electric power train (42).

**6.** Control method according to any one of the preceding claims, wherein the bypass means (9) comprises at least one valve (28, 29) with variable flow cross section.

**7.** Control method according to any one of the preceding claims, wherein the temperature (Treo) of the refrigerant (FR) is measured by a temperature sensor (36) arranged in contact with the refrigerant (FR) exiting the first thermal exchanger (8).

**8.** Control method according to any one of Claims 1 to 6, wherein the temperature (Treo) of the refrigerant (FR) exiting the first thermal exchanger (8) is estimated as a function of a flow rate of the air flow (FA) passing through the first thermal exchanger (8) and the temperature of this air flow (FA).

**9.** Control method according to any one of the preceding claims, wherein the element of the electric power train (42) is an electrical storage device (31) of the vehicle.

Figure 1

Figure 2

Figure 3

Figure 4

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017317393 A1